# EUROPÄISCHE PATENTSCHRIFT

(11) **EP 2 486 888 B1**
(45) Veröffentlichungstag und Bekanntmachung des Hinweises auf die Patenterteilung: **08.06.2016**
(21) Anmeldenummer: 12000008.8
(22) Anmeldetag: 02.01.2012
(51) Int. Cl.: A61C 3/02

(54) **Dentalinstrument und Verfahren zu seiner Herstellung**
Dental instrument and method for its manufacturing
Instrument dentaire et méthode pour sa fabrication

(30) Priorität: 10.02.2011 DE 102011010897
(43) Veröffentlichungstag der Anmeldung: 15.08.2012
(73) Patentinhaber: Gebr. Brasseler GmbH & Co. KG, 32657 Lemgo (DE)
(72) Erfinder: Krumsiek, Michael, 32657 Lemgo (DE)
(74) Vertreter: Hoefer & Partner Patentanwälte mbB

(56) Entgegenhaltungen:
- DE-A1-102006 049 581
- GB-A- 1 458 886
- US-A- 2 942 640
- US-A- 5 407 312
- US-A- 6 106 291

## Beschreibung

Die Erfindung bezieht sich auf ein Dentalinstrument mit einem mit Schneiden versehenen Kopf sowie mit einem in ein Antriebselement einspannbaren Schaft sowie ein Verfahren zu dessen Herstellung.

Im Einzelnen bezieht sich die Erfindung auf ein Dentalinstrument, bei welchem der Kopf aus einem keramischen Material gefertigt ist und der Schaft aus einem metallischen Werkstoff besteht.

Im Einzelnen bezieht sich die Erfindung insbesondere auf einen Fräser, welcher insbesondere in zahntechnischen Labors zum Einsatz kommt. Die Erfindung ist hierauf jedoch nicht beschränkt. Denkbar ist auch der Einsatz im Rahmen der Allgemeinchirurgie, um z.B. Artefakte in der Bildgebung durch ein MRT während der Behandlung zu vermeiden.

Aus dem Stand der Technik ist es bekannt, derartige Dentalinstrumente entweder vollständig aus Metall oder vollständig aus Kunststoff zu fertigen. Bei Ausgestaltungsformen, bei welchen der Kopf einen größeren Durchmesser und/oder größere Abmessungen als der Schaft aufweist, ist es insbesondere bei der Fertigung aus einem keramischen Material aus wirtschaftlichen Gründen sowie aus Gründen der präzisen Fertigung unerwünscht, wenn übermäßig viel Material von einem Rohling im Bereich des Schafts abgetragen werden muss. Es wurden deshalb sogenannte Hybrid-Dentalinstrumente entwickelt, bei welchen der Kopf aus einem keramischen Material besteht, während der Schaft aus Metall gefertigt ist und bei welchen der keramische Kopf mit dem metallischen Schaft gefügt sind. Derartige Fügeverbindungen erfordern jedoch eine sichere Verbindung, die sich insbesondere nicht durch die bei der Verwendung des Instruments auftretenden Kräfte und/oder Schwingungen löst.

Die DE 10 2006 049 581 A1 beschreibt ein rotierendes dental-chirurgisches Instrument mit einem Schaft aus einem metallischen Werkstoff und mit einem mit zumindest einer Schneide versehenen Kopf, wobei der Kopf mit dem Schaft mittels eines Lotes verbunden ist.

Die US 2,942,640 A beschreibt eine Sicherung einer Mutter. Diese weist an ihrem Innengewinde eine Ringnut auf, in welche ein Sicherungsmaterial eingequetscht wird.

Der Erfindung liegt die Aufgabe zugrunde, ein Dentalinstrument der eingangs genannten Art zu schaffen, welches bei einfachem Aufbau und einfacher, kostengünstiger Herstellbarkeit eine funktionssichere, nicht lösbare Verbindung zwischen dem Kopf und dem Schaft aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der Kopf einen Befestigungsansatz aufweist, welcher mit einem Außengewinde versehen ist. Ein derartiger Befestigungsansatz kann aus einem keramischen Werkstoff in einfacher Weise hergestellt werden, beispielsweise durch Schleifen. Hierdurch ergeben sich zum Einen niedrige Herstellungskosten, zum Anderen ist es möglich, den Befestigungsansatz sowie das Gewinde so zu gestalten, dass sich eine feste Verbindung mit guter Kraftübertragung ergibt und eine Konstruktion gewählt werden kann, die die Gefahr von Kerbspannungen oder ähnlichem vermindert.

Erfindungsgemäß ist vorgesehen, dass der Schaft an seinem stirnseitigen Endbereich mit einer Gewindeausnehmung versehen ist, in welche der Befestigungsansatz einschraubbar ist. Auch die Herstellung des Schaftes mit der Gewindeausnehmung ist einfach und kostengünstig realisierbar, insbesondere mittels eines spanenden Bearbeitungsverfahrens.

Erfindungsgemäß ist weiterhin vorgesehen, dass im Bereich zwischen dem Befestigungsansatz und der Gewindeausnehmung eine Sicherungsausnehmung ausgebildet ist.

In besonders günstiger Ausgestaltung der Erfindung ist vorgesehen, dass die Sicherungsausnehmung so gestaltet ist, dass sie zur Einbringung eines formschlüssigen Sicherungselements geeignet ist. Mit Hilfe des erfindungsgemäß vorgesehenen Sicherungselements wird eine Relativdrehung zwischen den beiden Gewinden des Befestigungsansatzes und der Gewindeausnehmung verhindert. Es ist somit ausgeschlossen, dass beim Betrieb des Dentalinstruments durch auftretende Kräfte, Schwingungen oder ähnliches ein Lösen des Kopfes von dem Schaft erfolgen kann.

Insbesondere ist erfindungsgemäß vorgesehen, dass das Sicherungselement so angeordnet ist, dass dieses formschlüssig in zumindest eine Ausnehmung der Gewindeausnehmung und des Befestigungsansatzes drehsichernd eingreift.

Erfindungsgemäß ist das Sicherungselement aus einem aushärtbaren Material gefertigt, welches bevorzugterweise vor seiner Aushärtung elastisch, flüssig oder pastös ist. Insbesondere kann erfindungsgemäß das Sicherungselement aus einem Klebstoffmaterial gefertigt sein.

Alternativ ist das Sicherungselement auch aus einem Aktivlot realisierbar, welches dann induktiv über den im Keramikkopf steckenden Stahlschaft erwärmt wird.

Die Herstellung des erfindungsgemäßen Dentalinstruments erfolgt somit zunächst durch die Ausbildung des Außengewindes an dem Befestigungsansatz und der Gewindeausnehmung, nachdem der Kopf und der Schaft entweder als Rohling hergestellt sind oder bereits die fertige Form aufweisen. Nachfolgend wird das Außengewinde des Befestigungsansatzes in die Gewindeausnehmung eingeschraubt, wobei hierbei das Sicherungselement appliziert wird. Die Applikation des Sicherungselements kann beispielsweise bei Verwendung eines pastösen, flüssigen oder elastischen Sicherungselements so erfolgen, dass das Material des Sicherungselements auf das Außengewinde aufgebracht wird und/oder in die Gewindeausnehmung eingebracht wird. Bei einem nachfolgenden Einschrauben des Befestigungsansatzes in die Gewindeausnehmung wird somit das Material des Sicherungselements zwischen den Gewindegängen verquetscht und zusätzlich in die zumindest eine Sicherungsausnehmung eingebracht. Nach dem Aushärten des Materials des Sicherungselements verbindet dieses somit das Außengewinde des Befestigungsansatzes mit der Gewindeausnehmung. Zusätzlich kann eine Verklebung oder Verbindung von weiteren Kontaktflächen zwischen dem Kopf und dem Schaft erfolgen. Da das Material des Sicherungselements insbesondere in die Sicherungsausnehmung eingebracht ist erfolgt eine formschlüssige Verankerung, die eine Relativdrehung zwischen dem Außengewinde und dem Gewinde der Gewindeausnehmung verhindert. Selbst bei einem Lösen des Kontaktes oder der Haftung zwischen dem Material des Sicherungselements und dem Außengewinde des Befestigungsansatzes oder dem Gewinde der Gewindeausnehmung kann somit keine Relativdrehung erfolgen, da eine formschlüssige Verankerung vorliegt. Der Kopf kann sich somit nicht von dem Schaft lösen.

Die erfindungsgemäße Drehsicherung erfordert nicht eine dicke, voluminöse Ausbildung des Sicherungselements. Entscheidend ist es, dass eine Sicherungsausnehmung vorgesehen ist, welche mit dem Material des Sicherungselements gefüllt ist und in welcher somit nach dem Aushärten ein festes Sicherungselement gebildet ist.

In erfindungsgemäßer günstiger Weiterbildung kann vorgesehen sein, dass zwischen dem Gewinde des Befestigungsansatzes und dem Innengewinde der Gewindeausnehmung ein Spiel vorhanden ist, um Material für das Sicherungselement einzubringen.

Die Sicherungsausnehmung ist in bevorzugter Weise in Form einer in der Gewindeausnehmung angeordneten Ringnut ausgebildet, es ist jedoch auch möglich, in axialer Richtung ausgerichtete Ausnehmungen, wie Nuten oder Abflachungen vorzusehen. Entscheidend ist erfindungsgemäß, dass ein abgeschlossenes Innenvolumen vorhanden ist, welches mit dem Material des Sicherungselements ausgefüllt wird, während der Befestigungsansatz in die Gewindeausnehmung eingeschraubt wird. Durch das nachfolgende Aushärten des Materials des Sicherungselements ergibt sich dann die erfindungsgemäße formschlüssige Verankerung.

In günstiger Ausgestaltung der Erfindung ist weiterhin vorgesehen, dass der Befestigungsansatz und/oder die Gewindeausnehmung mit einer Dekompressionsausnehmung versehen ist. Diese ist bevorzugterweise axial angeordnet (bezogen auf eine Mittelachse des Dentalinstruments). Durch die Dekompressionsausnehmung wird überschüssiges Material des Sicherungselements während des Einschraubvorganges ausgebracht. Da das Material des Sicherungselementes inkompressibel ist, ergibt sich somit eine sichere Verbindung des Kopfes mit dem Schaft.

In günstiger Ausgestaltung der Erfindung ist es möglich, die Dekompressionsausnehmung als Sicherungsausnehmung auszubilden, da auch eine sich beispielsweise in Axialrichtung erstreckende Dekompressionsnut nach Füllung mit Material des Sicherungselements und nachfolgender Aushärtung formschlüssig eine Relativdrehung zwischen dem Außengewinde des Befestigungsansatzes und dem Innengewinde der Gewindeausnehmung verhindert.

Erfindungsgemäß werden als Material des Sicherungselements insbesondere Klebstoffe eingesetzt, die eine Biokompatibilität gemäß DIN EN ISO 10993 aufweisen.

Es versteht sich, dass die Erfindung nicht auf die Ausbildung eines Befestigungsansatzes mit einem Außengewinde an dem Kopf und eine Gewindeausnehmung an dem Schaft beschränkt ist. Vielmehr ist es erfindungsgemäß auch möglich, in dem Kopf eine Gewindeausnehmung vorzusehen und den Befestigungsansatz an dem Schaft auszubilden.

Die erfindungsgemäß vorgesehenen Gewinde können in unterschiedlichster Ausgestaltung ausgebildet sein, beispielsweise eingängig oder mehrgängig. Die Grundform des Befestigungsansatzes sowie der Gewindeausnehmung kann zylindrisch oder konisch sein. Weiterhin ist es besonders bevorzugt, wenn das Gewinde als Rundgewinde ausgebildet ist. Hierdurch werden Kerbspannungen vermieden. Weiterhin können erfindungsgemäß verschiedenste Gewindesteigungen vorgesehen sein.

Im Folgenden wird die Erfindung anhand eines Ausführungsbeispiels in Verbindung mit der Zeichnung beschrieben. Dabei zeigt:
- Fig. 1: eine Seitenansicht eines erfindungsgemäßen Dentalinstruments im fertiggestellten Zustand,
- Fig. 2: eine Explosionsansicht, und
- Fig. 3: eine Schnittansicht analog Fig. 2.

Das erfindungsgemäße Dentalinstrument umfasst einen metallischen, zylindrischen Schaft 3, welcher in üblicher Weise ausgebildet und dimensioniert ist. Der Schaft 3 kann in eine Antriebsvorrichtung eingespannt werden, beispielsweise ein Winkelstück. Der Schaft 3 ist an seinem Endbereich mit einem im Durchmesser vergrößerten Anschlussbereich 11 verbunden. An dem Anschlussbereich 11 des Schaftes 3 ist ein Kopf 2 aus einem keramischen Material befestigt. Der Kopf 2 kann in üblicher Weise ausgebildet sein, so wie dies der Stand der Technik zeigt. Der Kopf 2 weist mehrere Schneiden 1 auf, er kann zylindrisch, abgerundet, kugelförmig, ballig oder in sonstiger Weise ausgebildet sein. Das Bezugszeichen 10 bezeichnet die Mittelachse/ Drehachse.

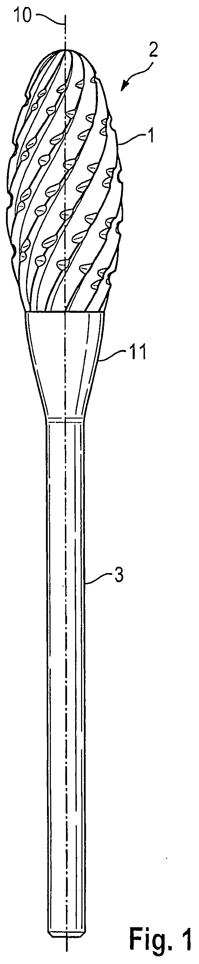

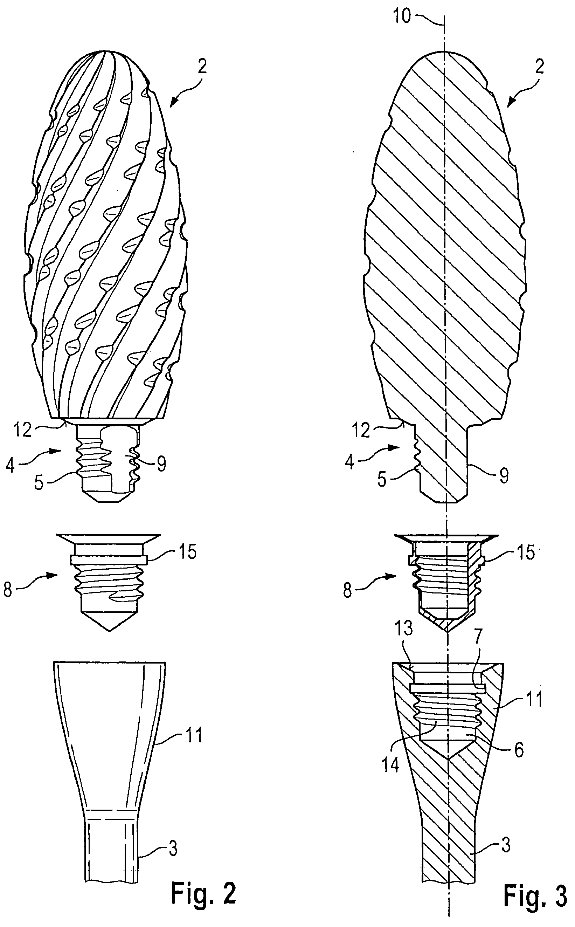

Die Fig. 2 und 3 zeigen eine schematische Explosionsansicht, wobei der Kopf 2 als zylindrischer Rohling dargestellt ist, der noch nicht die in Fig. 1 gezeigte fertige Form mit den Schneiden 1 aufweist.

An dem Kopf 2 ist ein Befestigungsansatz 4 ausgebildet, welcher eine zylindrische Grundform hat und mit einem Außengewinde 5 versehen ist. Das Außengewinde 5 kann beispielsweise als Rundgewinde ausgestaltet sein.

Angrenzend an den Befestigungsansatz 4 ist eine Kontaktfläche 12 ausgebildet, welche kegelförmig ausgestaltet ist und passend zu einer Kontaktfläche 13 des Anschlussbereichs 11 des Schaftes 3 ausgebildet ist. Hierdurch ergibt sich eine dichtende Anlage zwischen dem Kopf 2 und dem Schaft 3, so dass eine fugenlose Verbindung (insbesondere Verklebung) möglich ist.

Wie aus Fig. 3 ersichtlich ist, weist der Schaft 3 eine Gewindeausnehmung 6 auf, welche passend zu dem Außengewinde 5 ausgebildet ist.

Zu der erfindungsgemäßen Drehsicherung ist im Bereich des Innengewindes der Gewindeausnehmung 6 eine Sicherungsausnehmung 7 vorgesehen, welche in Form einer hinterschnittenen Ringnut ausgebildet ist.

Die Fig. 2 und 3 zeigen weiterhin ein Sicherungselement 8, welches sich durch Einbringen eines aushärtbaren Materials beim Einschrauben des Außengewindes 5 in ein Gewinde 14 der Gewindeausnehmung 6 ergibt. Hierzu wird beispielsweise ein aushärtbarer Klebstoff in die Gewindeausnehmung 6 eingebracht oder auf den Befestigungsansatz 4 aufgebracht. Beim Einschrauben wird dieses Material, welches nach der Aushärtung das Sicherungselement 8 bildet, in die entstehenden Zwischenräume eingequetscht, insbesondere in die Sicherungsausnehmung 7. Es bildet sich somit ein Sicherungselement 8, so wie dies in den Fig. 2 und 3 dargestellt ist.

Erfindungsgemäß ist eine Dekompressionsausnehmung 9 vorgesehen, welche beispielsweise in Form einer Abflachung oder einer Axialnut des Befestigungsansatzes 4 ausgebildet sein kann. Hierdurch wird überschüssiges Material des Sicherungselements (Klebstoff) ausgepresst.

Es versteht sich, dass das in den Fig. 2 und 3 gezeigte Sicherungselement 8 nicht zwangsläufig in dieser körperlichen Form ausgebildet werden muss. Ausreichend ist es, wenn die Sicherungsausnehmung 7 (Hinterschnitt, Ringnut etc.) vollständig mit dem Material des Sicherungselements gefüllt ist. Bei dem gezeigten Ausführungsbeispiel bildet sich an dem Sicherungselement 8 eine Ringwulst 15, die sich in der Ringnut 7 (Sicherungsausnehmung) befindet und sonst eine Axialbewegung blockiert. In Abhängigkeit von dem Spiel zwischen dem Außengewinde 5 des Befestigungsansatzes 4 sowie der Dimensionierung der Gewindeausnehmung 6 kann sich zusätzlich die in den Fig. 2 und 3 gezeigte kappenförmige oder napfförmige Gestaltung ergeben. Insgesamt ist es erfindungsgemäß entscheidend, dass in dem Kontaktbereich zwischen dem Außengewinde 5 des Befestigungsansatzes 4 und dem Innengewinde 14 die Gewindeausnehmung 6 ein formschlüssig eine lösende Drehung verhinderndes Sicherungselement vorgesehen ist.

Das Material des Sicherungselements kann als Mehrkomponentenmaterial ausgebildet sein, welches selbsttätig aushärtet. Es ist jedoch auch möglich, Material zu verwenden, welches beispielsweise durch Wärmeeinwirkung aushärtbar ist. Auch ein durch Wärmeeinwirkung verflüssigbares Material, z.B. ein Lötmaterial, ist erfindungsgemäß verwendbar.

Erfindungsgemäß erfolgt somit eine Verbindung zwischen dem Kopf und dem Schaft bei Verwendung eines Klebematerials als Material für das Sicherungselement durch übliche Verklebung durch Adhäsion oder ähnliche Effekte. Das erfindungsgemäße formschlüssige Sicherungselement dient der Verhinderung eines Ausschraubens und Lösens der Gewinde für den Fall, dass sich die Klebeverbindung (Fügeverbindung) durch auftretende Kräfte, durch Schwingungen, durch Temperatureinwirkung oder andere Effekte lösen sollte.

### Bezugszeichen liste

- 1: Schneide
- 2: Kopf
- 3: Schaft
- 4: Befestigungsansatz
- 5: Außengewinde
- 6: Gewindeausnehmung
- 7: Sicherungsausnehmung / Hinterschnitt / Ringnut
- 8: Sicherungselement
- 9: Dekompressionsausnehmung
- 10: Mittelachse / Drehachse
- 11: Anschlussbereich
- 12: Kontaktfläche
- 13: Kontaktfläche
- 14: Gewinde
- 15: Ringwulst

## Patentansprüche

1. Dentalinstrument mit einem mit Schneiden (1) versehenen, aus einem keramischen Werkstoff gefertigten Kopf (2) sowie mit einem in ein Antriebselement einspannbaren, aus einem metallischen Werkstoff gefertigten Schaft (3), wobei der Kopf (2) einen Befestigungsansatz (4) aufweist, welcher mit einem Außengewinde (5) versehen ist und wobei der Schaft (3) mit einer stirnseitigen Gewindeausnehmung (6) versehen ist, in welche der Befestigungsansatz (4) einschraubbar ist, **dadurch gekennzeichnet, dass** im Bereich zwischen dem Befestigungsansatz (4) und der Gewindeausnehmung (6) sowohl an dem Befestigungsansatz (4) als auch an der Gewindeausnehmung (6) jeweils eine Sicherungsausnehmung (7, 9) ausgebildet ist, in welche ein Sicherungselement (8) eingebracht ist, welches formschlüssig in beide Sicherungsausnehmungen (7, 9) drehsichernd eingreift, wobei das Sicherungselement (8) aus einem aushärtbaren Material ausgebildet ist.

2. Dentalinstrument nach Anspruch 1, **dadurch gekennzeichnet, dass** die Sicherungsausnehmung (7) in Form eines Hinterschnitts oder einer Ringnut ausgebildet ist.

3. Dentalinstrument nach Anspruch 1 oder 2, **dadurch gekennzeichnet, dass** das Sicherungselement (8) aus einem elastischen, flüssigen, pastösen und/oder Klebstoffmaterial oder aus einem von einem flüssigen in einen festen Zustand überführbaren Material ausgebildet ist.

4. Dentalinstrument nach einem der Ansprüche 1 bis 3, **dadurch gekennzeichnet, dass** der Befestigungsansatz (4) und/oder die Gewindeausnehmung (6) mit einer axialen, bezogen auf eine Mittelachse (10) des Dentalinstruments angeordneten Dekompressionsausnehmung (9) versehen ist.

5. Dentalinstrument nach einem der Ansprüche 1 bis 4, **dadurch gekennzeichnet, dass** zwischen dem Befestigungsansatz (4) und der Gewindeausnehmung (6) ein Spiel vorgesehen ist.

6. Dentalinstrument nach einem der Ansprüche 1 bis 5, **dadurch gekennzeichnet, dass** eine Sicherungsausnehmung (7) in Form einer in der Gewindeausnehmung (6) angeordneten Ringnut ausgebildet ist.

7. Dentalinstrument nach einem der Ansprüche 1 bis 6, **dadurch gekennzeichnet, dass** eine Nut oder Abflachung am Befestigungsansatz (4) ausgebildet ist.

8. Dentalinstrument nach einem der Ansprüche 1 bis 7, **dadurch gekennzeichnet, dass** das Gewinde (5) des Befestigungsansatzes (4) und/oder ein Gewinde (14) der Gewindeausnehmung (6) als Rundgewinde und/oder eingängig und/oder mehrgängig und/oder mit einer zylindrischen Grundform und/oder mit einer kegeligen Grundform ausgebildet ist.

9. Verfahren zur Herstellung eines Dentalinstruments nach einem der Ansprüche 1 bis 8, **dadurch gekennzeichnet, dass** der Schaft (3) und der Kopf (2) separat gefertigt werden und vor dem Einschrauben des Befestigungsansatzes (4) in die Gewindeausnehmung (6) ein Sicherungsmaterial auf den Befestigungsansatz (4) aufgebracht und/oder in die Gewindeausnehmung (6) eingebracht wird und nachfolgend der Kopf (2) mit dem Schaft (3) verschraubt wird, wobei nachfolgend das Sicherungsmaterial ausgehärtet wird.

## Claims

1. Dental instrument comprising a head (2), provided with blades (1) and made of a ceramic material, and comprising a shaft (3), clampable in a drive element and made of a metal material, the head (2) having a fastening attachment (4) which is provided with an external thread (5), and the shaft (3) being provided with an end-face threaded recess (6), into which the fastening attachment (4) can be screwed, **characterised in that**, in the region between the fastening attachment (4) and the threaded recess (6), a fixing recess (7, 9), into which a fixing element (8) is introduced which engages positively in the two fixing recesses (7, 9) so as to provide rotary protection, is formed on each of the fastening attachment (4) and the threaded recess (6), the fixing element (8) being formed from a curable material.

2. Dental instrument according to claim 1, **characterised in that** the fixing recess (7) is in the form of an undercut or an annular groove.

3. Dental instrument according to either claim 1 or claim 2, **characterised in that** the fixing element (8) is formed from a resilient, liquid, paste-like and/or adhesive material or from a material which can be brought from a liquid to a solid state.

4. Dental instrument according to any of claims 1 to 3, **characterised in that** the fastening attachment (4) and/or the threaded recess (6) are provided with a decompression recess (9) arranged axially with respect to a central axis (10) of the dental instrument.

5. Dental instrument according to any of claims 1 to 4, **characterised in that** play is provided between the fastening attachment (4) and the threaded recess (6).

6. Dental instrument according to any of claims 1 to 5, **characterised in that** a fixing recess (7) in the form of an annular groove arranged in the threaded recess (6) is formed.

7. Dental instrument according to any of claims 1 to 6, **characterised in that** a groove or bevel is formed on the fastening attachment (4).

8. Dental instrument according to any of claims 1 to 7, **characterised in that** the thread (5) of the fastening attachment (4) and/or a thread (14) of the threaded recess (6) is formed as a round thread and/or single-start and/or multi-start and/or with a cylindrical basic shape and/or with a conical basic shape.

9. Method for manufacturing a dental instrument according to any of claims 1 to 8, **characterised in that** the shaft (3) and the head (2) are manufactured separately and, before the fastening attachment (4) is screwed into the threaded recess (6), a fixing material is applied to the fastening attachment (4) and/or introduced into the threaded recess (6), and subsequently the head (2) is screwed together with the shaft (3), the fixing material subsequently being cured.

## Revendications

1. Instrument dentaire comprenant une tête (2) pourvue de lames (1), produite à partir d'un matériau en céramique et comprenant également une tige (3) pouvant être enserrée dans un élément d'entraînement, produite à partir d'un matériau métallique, sachant
que la tête (2) présente un appendice de fixation (4), qui est pourvu d'un filetage extérieur (5), et sachant
que la tige (3) est pourvue d'un évidement fileté (6) situé côté frontal, dans lequel l'appendice de fixation (4) peut être vissé, **caractérisé en ce**
**qu'**est réalisé, dans la zone entre l'appendice de fixation (4) et l'évidement fileté (6) ainsi qu'au niveau de l'appendice de fixation (4) et également au niveau de l'évidement fileté (6), respectivement un évidement de blocage (7, 9), dans lequel un élément de blocage (8) est introduit, lequel vient en prise par complémentarité de forme avec deux évidements de blocage (7, 9) de manière à bloquer toute rotation, sachant que l'élément de blocage (8) est réalisé à partir d'un matériau durcissable.

2. Instrument dentaire selon la revendication 1, **caractérisé en ce que** l'évidement de blocage (7) est réalisé sous la forme d'une contre-dépouille ou d'une rainure annulaire.

3. Instrument dentaire selon la revendication 1 ou 2, **caractérisé en ce que** l'élément de blocage (8) est réalisé à partir d'un matériau élastique, liquide, pâteux et/ou adhésif ou à partir d'un matériau pouvant passer d'un état liquide à un état solide.

4. Instrument dentaire selon l'une quelconque des revendications 1 à 3, **caractérisé en ce que** l'appendice de fixation (4) et/ou l'évidement fileté (6) sont pourvus d'un évidement de décompression (9) axial disposé par rapport à un axe central (10) de l'instrument dentaire.

5. Instrument dentaire selon l'une quelconque des revendications 1 à 4, **caractérisé en ce qu'**un jeu est prévu entre l'appendice de fixation (4) et l'évidement fileté (6).

6. Instrument dentaire selon l'une quelconque des revendications 1 à 5, **caractérisé en ce**
**qu'**un évidement de blocage (7) est réalisé sous la forme d'une rainure annulaire disposée dans l'évidement fileté (6).

7. Instrument dentaire selon l'une quelconque des revendications 1 à 6, **caractérisé en ce qu'**une rainure ou un méplat est réalisé(e) au niveau de l'appendice de fixation (4).

8. Instrument dentaire selon l'une quelconque des revendications 1 à 7, **caractérisé en ce que** le filetage (5) de l'appendice de fixation (4) et/ou un filetage (14) de l'évidement fileté (6) sont réalisés sous la forme d'un filetage rond et/ou avec un seul pas et/ou avec plusieurs pas et/ou avec une forme de base cylindrique et/ou avec une forme de base conique.

9. Procédé servant à fabriquer un instrument dentaire selon l'une quelconque des revendications 1 à 8, **caractérisé en ce que** la tige (3) et la tête (2) sont produites séparément et, avant le vissage de l'appendice de fixation (4) dans l'évidement fileté (6), un matériau de blocage est appliqué sur l'appendice de fixation (4) et/ou est introduit dans l'évidement fileté (6) et par la suite la tête (2) est vissée à la tige (3), sachant que par la suite le matériau de blocage est durci.
